# FASCICULE DE BREVET EUROPEEN

(11) **EP 3 077 894 B1**
(45) Date de publication et mention de la délivrance du brevet: **20.02.2019**
(21) Numéro de dépôt: 14814970.1
(22) Date de dépôt: 27.11.2014
(51) Int. Cl.: G06F 3/0354, B43K 29/00, B43K 29/18

(54) **DISPOSITIF MANUEL COMPRENANT UN EMBOUT AMOVIBLE POUR ECRAN CAPACITIF**
MANUELLE VORRICHTUNG MIT ABNEHMBARER SPITZE FÜR EINEN KAPAZITIVEN BILDSCHIRM
MANUAL DEVICE COMPRISING A DETACHABLE TIP FOR A CAPACITIVE SCREEN

(30) Priorité: 02.12.2013 FR 1361920
(43) Date de publication de la demande: 12.10.2016
(73) Titulaire: Société BIC, 92110 Clichy (FR)
(72) Inventeur: ROUDAUT, Etienne, 92250 La Garenne Colombes (FR); BEZ, Arnaud, 92380 Garches (FR)
(74) Mandataire: Milien, Jean-Baptiste Aurélien
(86) Numéro de dépôt international: PCT/FR2014/053057
(87) Numéro de publication internationale: WO 2015/082806

(56) Documents cités:
- WO-A1-2012/094633
- WO-A1-2013/140062
- US-A1- 2012 194 484
- US-A1- 2013 106 793
- US-B1- 8 139 049

## Description

### DOMAINE DE L'INVENTION

L'invention concerne un dispositif manuel comprenant un embout pour écran capacitif. Un tel embout pour écran capacitif est capable d'interférer/interagir avec l'écran capacitif de sorte que sa présence en un point donné dudit écran capacitif est détectable par ce dernier. Par exemple, l'écran capacitif est un écran de tablette multimédia ou de téléphone portable.

### ETAT DE LA TECHNIQUE ANTERIEURE

Pour utiliser un écran capacitif, un stylet pour écran capacitif est souvent nécessaire. Néanmoins, un tel stylet est un instrument spécifique présentant une unique tête pour un écran capacitif prédéterminé, et est onéreux.

US2012/0194484 concerne un stylet comprenant un embout amovible.

### PRESENTATION DE L'INVENTION

Un mode de réalisation concerne un dispositif manuel comprenant un corps et un embout amovible (ou un premier embout amovible) comprenant un coussinet pour écran capacitif, ledit embout amovible étant assemblé au corps par une connexion baïonnette, le coussinet et au moins une partie du corps étant en contact électrique l'un avec l'autre, et comprenant un système d'alignement azimutal de l'embout amovible par rapport au corps pour aligner azimutalement l'embout amovible et le corps avant de procéder à l'assemblage grâce à la connexion baïonnette.

Au sens de l'invention, le terme « corps » désigne de manière générale l'ensemble de tous les éléments qui ne font pas partie de l'embout.

Le corps forme en tout ou partie une partie de préhension du dispositif manuel. L'embout est configuré pour que l'utilisateur puisse le monter sur le corps et utiliser le dispositif manuel en le manipulant par le corps pour utiliser l'embout. L'utilisateur peut également retirer l'embout du corps grâce à la connexion baïonnette.

On rappelle qu'une connexion baïonnette est une connexion entre deux pièces qui permet leur assemblage au cours d'une séquence de deux mouvements, à savoir un premier mouvement puis un deuxième mouvement, le premier mouvement étant une mouvement de translation relative d'une pièce par rapport à l'autre tandis que le deuxième mouvement est un mouvement de rotation relative d'une pièce par rapport à l'autre. Pour désassembler les pièces, on procède à une séquence de mouvements inverse, à savoir d'abord mouvement de rotation relative d'une pièce par rapport à l'autre puis un mouvement de translation relative d'une pièce par rapport à l'autre.

Par « au moins une partie du corps » on entend tout élément du dispositif manuel ne faisant pas partie de l'embout. Par exemple, cet élément est une pièce extérieure du corps, par exemple une partie de préhension, ou une pièce intérieure du corps.

Un embout amovible (également appelé ci-après « embout ») est un embout configuré pour être monté ou démonté du corps par l'utilisateur, et ce sans effort particulier. En d'autres termes, l'embout amovible peut prendre une position montée ou une position démontée. Bien entendu, l'embout amovible peut comprendre une seule pièce ou plusieurs pièces distinctes assemblées.

On comprend que le coussinet (en anglais « pad ») est une terminaison configurée pour interagir avec un écran capacitif. Le coussinet est conducteur de courant électrique (grâce à son matériau de fabrication, ou grâce à un revêtement). La forme, la souplesse/rigidité et le/les matériaux d'un coussinet ne sont pas limités dans la mesure où ce coussinet est capable d'interagir avec un écran capacitif, c'est-à-dire que son contact avec un écran capacitif est détectable par ce dernier.

Le contact électrique entre le coussinet et le corps, ou une partie du corps, peut être direct ou indirect. Ainsi, selon une variante, le coussinet contacte directement une partie du corps. Selon une autre variante, le coussinet est en contact électrique avec le corps ou une partie de corps via une pièce intermédiaire. La connexion baïonnette, assurant un contact mécanique entre l'embout et le corps, permet notamment d'assurer un contact électrique satisfaisant entre ces parties. En outre, grâce à la connexion baïonnette, l'assemblage de l'embout amovible n'étant effectif que lorsque les premier et deuxième mouvements, qui sont des mouvements dont la course est prédéfinie, sont réalisés, on s'assure par ailleurs que la liaison électrique est effective lorsque l'embout est assemblé au corps, la liaison électrique étant assurée au moins en bout de course d'un des deux mouvements.

Un tel contact électrique permet de s'assurer qu'un écran capacitif est sensible à la présence du coussinet lorsque l'utilisateur manipule le dispositif manuel avec sa main et approche ledit coussinet de l'écran capacitif.

Grâce à la connexion baïonnette, on peut retirer l'embout amovible pour écran capacitif, et monter un autre embout pour écran capacitif ou encore un embout pour un tout autre usage.

On comprend qu'un système d'alignement azimutal est un système d'aide pour faire tourner l'embout par rapport au corps de manière à ce que les différents éléments de la connexion à baïonnette soient alignés pour pouvoir effectuer le premier mouvement de translation de l'assemblage par la connexion baïonnette. Par exemple, le système d'alignement azimutal présente une rampe hélicoïdale guidant un ou plusieurs ergots vers une position azimutale d'alignement. Selon un autre exemple, le système d'alignement azimutal comprend deux rampes hélicoïdales d'inclinaisons opposées et formant, vues selon une direction radiale, une forme générale sensiblement en « V ». Bien entendu ces exemples sont purement illustratifs et non limitatifs.

Ainsi, le dispositif manuel est plus polyvalent, ou moins spécifique, que les dispositifs connus de l'état de la technique. Le coût global d'un tel dispositif est moindre que le coût cumulé de deux dispositifs classiques distincts formant chacun un « outil » équivalent à un des embouts.

Dans certains modes de réalisation, l'assemblage de l'embout amovible au corps par la connexion baïonnette est verrouillé par un mécanisme d'encliquetage (ou clipsage) en rotation.

L'encliquetage (ou clipsage) est un mode d'assemblage de deux parties par engagement et déformation élastique (en général déformation locale, par exemple d'une languette, ou par déformation de l'ensemble des pièces impliquées dans l'assemblage). Lorsque les deux parties sont engagées dans la position d'encliquetage, les parties ont généralement repris leur forme initiale et ne présentent plus de déformation élastique (ou une déformation élastique moindre). Lorsque les deux parties sont engagées l'une avec l'autre dans la position d'encliquetage, elles coopèrent l'une avec l'autre de manière à s'opposer, voire bloquer, les mouvements relatifs desdites pièces dans le sens du dégagement (sens opposé au sens de l'engagement). En position d'encliquetage, les deux parties peuvent en outre coopérer de manière à s'opposer, voire bloquer, leurs mouvements relatifs dans le sens du prolongement de l'engagement, au-delà de la position d'encliquetage.

On comprend que le verrouillage par encliquetage est réalisé lors du mouvement de rotation de l'embout amovible par rapport au corps lors de l'assemblage grâce à la connexion baïonnette.

Un tel verrouillage permet de s'assurer que l'embout reste dans la position montée, assurant ainsi l'intégrité de l'assemblage de l'embout avec le corps, et un certain confort d'utilisation. Par ailleurs, l'encliquetage procure à l'utilisateur lors de l'assemblage un retour de force ou un signal (par exemple un son du type « clip ») indiquant que l'embout a bien atteint la position montée.

Dans certains modes de réalisation, le coussinet est en contact électrique avec le corps par l'intermédiaire d'un contacteur.

Le contacteur peut être une pièce dédiée uniquement à la réalisation du contact électrique entre le coussinet et le corps, ou bien une pièce pouvant également servir à d'autre(s) fonction(s). On comprend que le contacteur est une pièce distincte du coussinet. Par exemple le contacteur peut être une pièce servant également au montage du coussinet au sein de l'embout, ou bien une pièce de fixation de l'embout sur le corps.

Dans certains modes de réalisation, l'embout comprend une douille, l'embout étant assemblé au corps par la douille.

On comprend que la douille est une pièce de fixation de l'embout sur le corps. La douille et le coussinet peuvent former une seule et même pièce, ou bien deux pièces distinctes. Une telle douille permet de réaliser un assemblage robuste de l'embout sur le corps. Dans le cas où la douille et le coussinet sont deux pièces distinctes, la douille peut également, mais pas nécessairement, assurer un maintien satisfaisant du coussinet.

Dans certains modes de réalisation, la douille est en plastique conducteur.

Dans certains modes de réalisation, au moins une partie du corps coopérant avec l'embout amovible est en plastique conducteur.

Par la suite, et sauf indication contraire, par le terme « conducteur » ou « conductrice » on comprend « conducteur/conductrice de courant électrique ». Inversement, par la suite, et sauf indication contraire, par le terme « isolant » ou « isolante » on comprend « isolant/isolante vis-à-vis du courant électrique ».

On comprend que tout ou partie du corps est en plastique conducteur. On comprend également qu'au moins une partie du corps qui coopère avec l'embout, par exemple, mais pas uniquement, la partie de la connexion baïonnette appartenant au corps est en plastique conducteur. Selon une variante, la partie de préhension du corps est en plastique conducteur. Selon une autre variante, une partie interne du corps (i.e. qui n'est pas destinée à être directement maintenue par la main d'un utilisateur), par exemple une tige interne, est en plastique conducteur. Selon encore une autre variante, le corps présente une partie interne et une partie de préhension en plastique conducteur.

Un plastique (ou matériau polymérique) est un mélange contenant une matière de base (en général un polymère) qui est susceptible d'être moulé, façonné, en général à chaud et/ou sous pression, afin de fabriquer une pièce. Par exemple, le plastique est un thermoplastique. Par exemple, le plastique comprend un ou plusieurs des composés parmi l'acrylonitrile butadiène styrène (également connus sous l'acronyme ABS), acrylonitrile méthacrylate de méthyle (également connus sous l'acronyme AMMA), acrylonitrile styrène acrylate (également connus sous l'acronyme ASA), acétate de cellulose (également connus sous l'acronyme CA), acétobutyrate de cellulose (également connus sous l'acronyme CAB), acétopropionate de cellulose (également connus sous l'acronyme CAP), polystyrène expansé (également connus sous l'acronyme EPS), éthylène tétrafluoroéthylène (également connus sous l'acronyme ETFE), éthylène-alcool vinylique (également connus sous l'acronyme EVAL ou EVOH), perfluoro éthylène propylène (également connus sous l'acronyme FEP ou PFEP), méthylméthacrylate-butadiène-styrène (également connus sous l'acronyme MBS), méthylcellulose (également connus sous l'acronyme MC), polyamide (également connus sous l'acronyme PA), polycaprolactame (également connus sous l'acronyme PA6), polyamide-imide (également connus sous l'acronyme PAI), polyacrylonitrile (également connus sous l'acronyme PAN), polybutène-1 (également connus sous l'acronyme PB-1), polybutylène téréphtalate ou poly(téréphtalate de butylène) (également connus sous l'acronyme PBT), polycarbonate (également connus sous l'acronyme PC), polychlorotrifluoroéthylène (également connus sous l'acronyme PCTFE), polyéthylène (également connus sous l'acronyme PE), polyéthylène haute densité (également connus sous l'acronyme PE-HD), polyéthylène basse densité (également connus sous l'acronyme PE-LD), polyéthylène à basse densité linéaire (également connus sous l'acronyme PE-LLD), polyéthylène à ultra haute masse molaire (également connus sous l'acronyme PE-UHMW), copolymère bloc éther-amide (également connus sous l'acronyme PEBA), polyestercarbonate (également connus sous l'acronyme PEC), polyétheréthercétone (également connus sous l'acronyme PEEK), polyétherimide (également connus sous l'acronyme PEI), polyéthercétone (également connus sous l'acronyme PEK), poly(naphtalate d'éthylène) (également connus sous l'acronyme PEN), polyéthersulfone (également connus sous l'acronyme PESU), poly(éthylène téréphtalate) (également connus sous l'acronyme PET), perfluoroalkoxy (également connus sous l'acronyme PFA), polycétone (également connus sous l'acronyme PK), polyméthacrylate de méthyle (également connus sous l'acronyme PMMA), polyméthylpentène (également connus sous l'acronyme PMP), polyoxyméthylène ou polyacétal ou polyformaldéhyde (également connus sous l'acronyme POM), polypropylène ou polypropène (également connus sous l'acronyme PP), poly(phénylène éther) (également connus sous l'acronyme PPE), poly(oxyde de phénylène) (également connus sous l'acronyme PPO), poly(oxyde de propylène) (également connus sous l'acronyme PPOX), poly(sulfure de phénylène) (également connus sous l'acronyme PPS), polystyrène (également connus sous l'acronyme PS), polysulfone (également connus sous l'acronyme PSU), polytétrafluoroéthylène (également connus sous l'acronyme PTFE), polyuréthane (également connus sous l'acronyme PUR), poly(acétate de vinyle) (également connus sous l'acronyme PVAC), poly(alcool vinylique) (également connus sous l'acronyme PVAL), polychlorure de vinyle (également connus sous l'acronyme PVC), polyfluorure de vinylidène (également connus sous l'acronyme PVDF), poly(fluorure de vinyle) (également connus sous l'acronyme PVF), styrène-acrylonitrile (également connus sous l'acronyme SAN), silicone (également connus sous l'acronyme SI), styrène anhydride maléique (également connus sous l'acronyme SSMA ou SMAnh), polyéfine, polyester. De manière plus générale, le plastique est par exemple un matériau polymérique organique de synthèse ou polymère organique de synthèse.

Pour conférer un caractère conducteur au plastique, ce dernier comprend en général une charge. Une charge est un matériau additif introduit dans le plastique lors de la fabrication d'une pièce, dans cet exemple la douille ou le corps/partie du corps. Ainsi, un plastique chargé avec au moins un matériau conducteur est un plastique dans la masse duquel on a introduit lors de la fabrication de la pièce, au moins un matériau conducteur. Grâce à cette charge en matériau(x) conducteur(s) le plastique présente des propriétés conductrices. Par exemple, le plastique est chargé d'au moins 2% en masse en matériau conducteur. Par exemple, la charge en matériau conducteur comprend un ou plusieurs des composés parmi le noir de carbone, les nanotubes de carbone, ou des particules et/ou des fibres métalliques.

De tels plastiques conducteurs sont particulièrement bien adaptés à la fabrication de la douille et du corps ou d'une partie du corps à échelle industrielle à coûts réduits.

Dans certains modes de réalisation, le plastique conducteur est un plastique chargé en noir de carbone (ou particules de noir de carbone). Le noir de carbone est une charge conductrice qui présente l'avantage d'avoir une très fine granulométrie, et d'être facile à fabriquer et peu onéreuse.

Dans certains modes de réalisation, le corps s'étend selon une direction axiale et présente une première extrémité distale sur laquelle l'embout amovible est monté.

Un corps longitudinal (i.e. s'étendant selon une direction axiale) présente une ergonomie facilitant la manipulation d'un embout pour écran capacitif.

Dans certains modes de réalisation, le corps présente une deuxième extrémité distale opposée à la première extrémité distale, la deuxième extrémité distale présentant une pointe d'écriture ou équivalent.

Par exemple, la pointe d'écriture ou équivalent est une pointe de stylo bille, une pointe de stylo feutre, une pointe de mine de crayon, une pointe rigide pour écran résistif, un pointe de poinçon, ou tout autre embout de dispositif manuel.

Un mode de réalisation concerne un ensemble comprenant un dispositif manuel selon l'un quelconque des modes de réalisation décrit dans le présent document et au moins un deuxième embout amovible pour écran capacitif configuré pour être monté sur le corps dudit dispositif manuel à la place de l'embout amovible du dispositif manuel (ou premier embout).

Bien entendu, le deuxième embout peut être similaire ou différent du premier embout. Cet ensemble est particulièrement polyvalent.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
- la figure 1A représente un dispositif manuel équipé d'un embout amovible pour écran capacitif en position montée, tandis que la figure 1B représente ce même dispositif manuel où l'embout amovible est en position démontée,
- les figures 2A et 2B représentent partiellement le dispositif manuel de la figure 1A vu en perspective, l'embout étant représenté en éclaté, tandis que la figure 2C représente une vue en coupe selon le plan IIC de la figure 2B de l'embout assemblé en position montée,
- la figure 3 représente une vue selon la flèche III de la figure 2B du corps,
- la figure 4 représente une vue selon la flèche IV de la figure 2B du dispositif manuel,
- les figures 5A et 5B représentent partiellement le dispositif manuel vu en perspective équipé d'une première variante de l'embout amovible, l'embout étant représenté en éclaté, tandis que la figure 5C représente une vue en coupe selon le plan VC de la figure 5B de l'embout assemblé en position montée, et
- les figures 6A et 6B représentent partiellement le dispositif manuel vu en perspective équipé d'une deuxième variante de l'embout amovible, l'embout étant représenté en éclaté, tandis que la figure 6C représente une vue en coupe selon le plan VIC de la figure 6B de l'embout assemblé en position montée.

### DESCRIPTION DETAILLEE D'EXEMPLES DE REALISATION

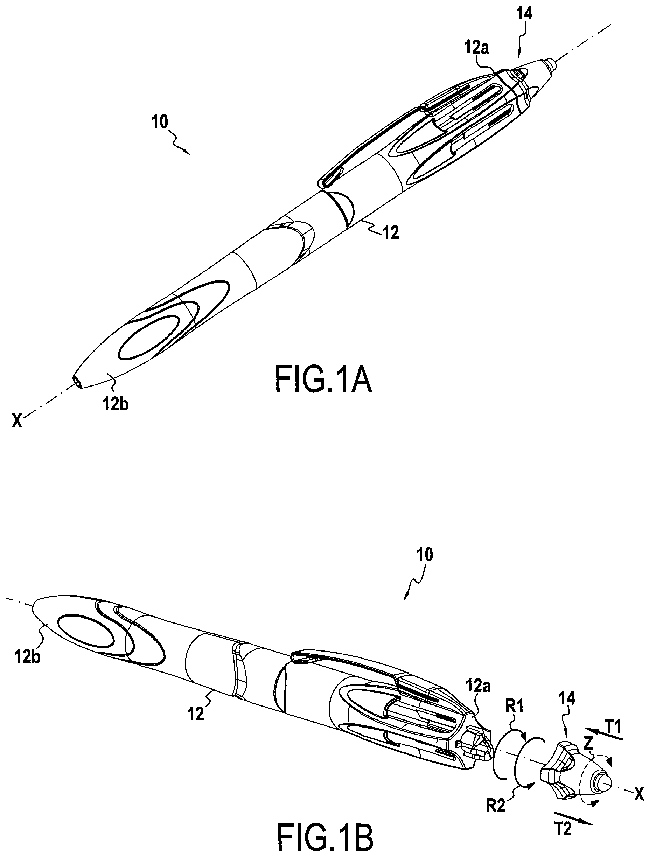

La figure 1A représente un dispositif manuel 10 comprenant un corps 12 s'étendant s'étendant longitudinalement selon une direction axiale X, le corps 12 présentant une première extrémité distale 12a et une deuxième extrémité distale 12b opposée selon la direction axiale X à la première extrémité distale 12a.

La première extrémité distale 12a est équipée d'un embout amovible 14 tandis que la deuxième extrémité distale 12b est équipée d'une pointe d'écriture (non représentée), dans cet exemple une pointe de stylo bille. Bien entendu selon une variante, la pointe d'écriture peut être une pointe de porte mine, de feutre, ou équivalent.

La figure 1B représente l'embout amovible 14 en position démontée tandis que l'embout 14 est en position montée sur la figure 1A. Pour monter l'embout 14 grâce à la connexion baïonnette décrite ci-après, on procède séquentiellement à un premier mouvement, à savoir un mouvement de translation selon la direction X selon la flèche T1, puis à un deuxième mouvement, à savoir un mouvement de rotation selon la direction azimutale Z selon la flèche R1. Pour démonter l'embout 14, on procède aux mouvements opposés selon une séquence inverse, à savoir qu'on procède d'abord à un mouvement de rotation selon la direction azimutale Z selon la flèche R2 de sens opposé à la flèche R1, puis à un mouvement de translation selon la direction X selon la flèche T2 de sens opposé à la flèche T1. Ces mouvements de translation et de rotation sont typiques des mouvements à réaliser pour effectuer un assemblage par une connexion baïonnette.

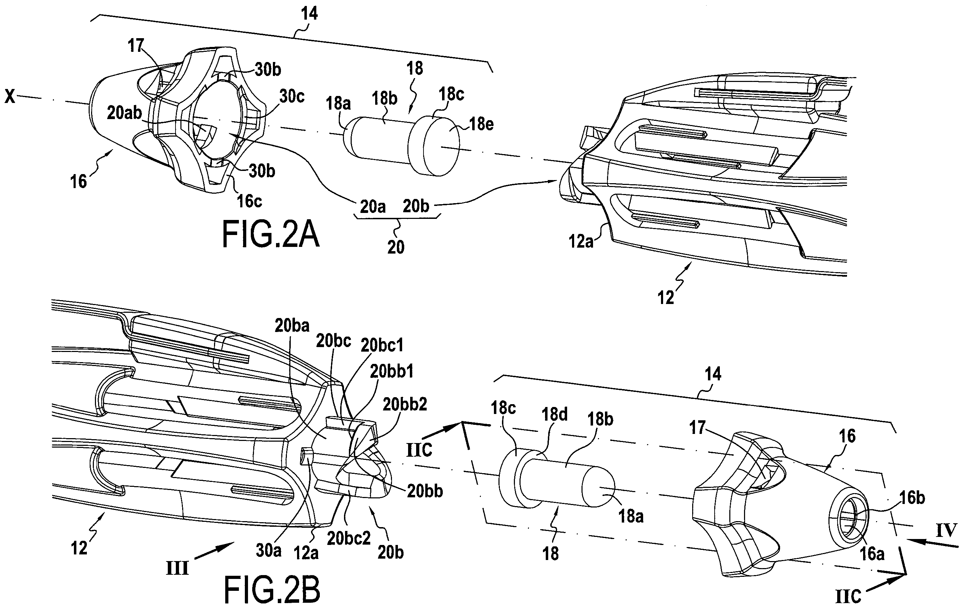

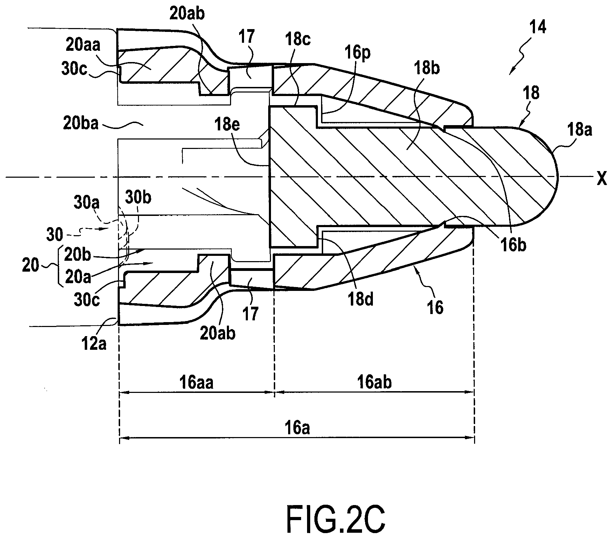

On va maintenant décrire plus en détail l'embout 14 et la connexion baïonnette 20 en référence aux figures 2A, 2B et 2C.

L'embout 14 comprend une douille 16 et un coussinet 18. La douille 16 présente une forme sensiblement cylindrique, le coussinet 18 étant emmanché dans une cavité axiale traversante 16a. Dans cet exemple non limitatif, la cavité 16a comprend une portion axiale sensiblement cylindrique 16aa recevant la partie mâle 20b de la connexion baïonnette 20 décrite ultérieurement et une portion axiale sensiblement tronconique 16ab recevant le coussinet 18. La douille 16 est équipée d'une griffe annulaire 16b sur sa paroi interne, et plus particulièrement sur la paroi de la portion axiale sensiblement tronconique 16ab de la cavité 16a, cette griffe 16b maintenant le coussinet 18 à l'intérieur de la cavité 16a. Bien entendu, la forme de la griffe n'est pas limitative. La douille présente un épaulement axial 16p configuré pour coopérer en appui avec le coussinet 18, dans le sens axial opposé au sens de rétention de la griffe 16b.

Le coussinet 18 présente une extrémité distale 18a de coopération avec un écran capacitif, cette extrémité 18a présentant dans cet exemple une forme sensiblement hémisphérique pleine. L'extrémité 18a est disposée dans le prolongement d'une partie de fixation 18b de forme sensiblement cylindrique pleine. Cette partie de fixation 18b s'étend axialement entre l'extrémité 18a et une embase 18c. L'embase 18c forme une collerette annulaire faisant radialement saillie vers l'extérieur par rapport à la partie de fixation 18b. La face de la collerette de l'embase 18c disposée du côté de la partie de fixation 18b forme un épaulement 18d qui coopère en butée avec un épaulement 16p prévu dans douille 16. Ainsi, grâce à la griffe 16b et à l'épaulement 16p, le coussinet 18 est bloqué en translation selon la direction X dans la cavité 16, et plus particulièrement dans la partie 16ab de la cavité 16. La face d'extrémité proximale 18e opposée à l'extrémité distale 18a forme une face d'appui en forme de disque.

Le dispositif manuel 10 comprend une connexion baïonnette 20 pour monter l'embout 14 sur le corps 12. Cette connexion baïonnette 20 comprend une partie femelle 20a ménagée dans l'embout 14 et une partie mâle 20b faisant saillie axialement depuis l'extrémité distale 12a du corps 12.

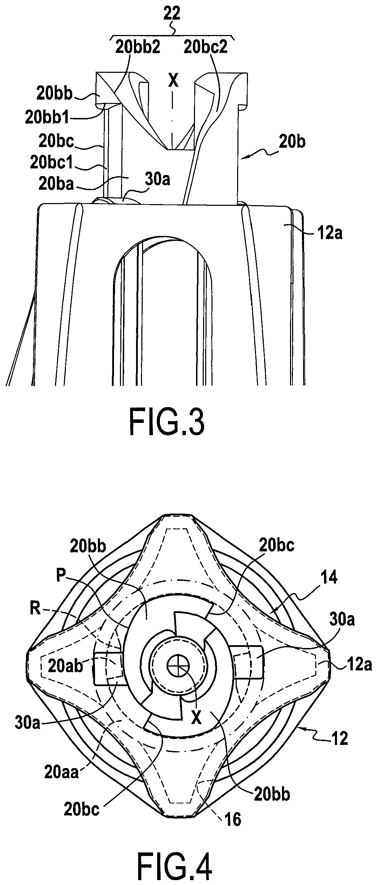

Dans cet exemple, la partie femelle 20a est formée dans la douille 16, et comprend une jupe 20aa délimitant la cavité axiale sensiblement cylindrique 16aa de la douille 16 et deux ergots 20ab faisant saillie radialement depuis la paroi interne de la jupe 20aa. Les deux ergots 20ab sont diamétralement opposés et présentent chacun une rampe azimutale R à deux pentes (cf. fig. 4) facilitant leur coopération avec la partie mâle 20b lors des mouvements de rotation R1 et R2 (cf. fig. 1B) de l'embout 14 par rapport au corps 12 lors de leur assemblage.

La partie mâle 20b comprend un cylindre 20ba s'étendant axialement depuis l'extrémité distale 12a du corps 12, deux ailettes 20bb s'étendant radialement depuis l'extrémité distale du cylindre 20ba. Ces deux ailettes 20bb sont diamétralement opposées et présentent, vues selon la flèche IV de la figure 2B, un profil extérieur P radial en partie en forme de portion de spirale (cf. fig.4). Bien entendu, l'évolution de la portion de spirale peut être monotone, ou non, en fonction de l'azimut. Cette forme en portion de spirale facilite la coopération des ailettes 20bb avec la partie femelle 20a lors des mouvements de rotation R1 et R2 (cf. fig. 1B) de l'embout 14 par rapport au corps 12 lors de leur assemblage.

Le cylindre 20ba comprend également, en bout de course azimutale des ailettes 20bb dans le sens de rotation R1, des butées azimutales 20bc coopérant en butée azimutale avec les ergots 20ab de la partie femelle 20a. Les deux butées 20bc limitent donc le mouvement en rotation selon la flèche R1 (cf. fig. 1B), ce qui permet de s'assurer que l'assemblage par la connexion baïonnette 20 est finalisé. Dans cet exemple non limitatif, ces butées azimutales 20bc s'étendent axialement sur toute la longueur axiale du cylindre 20ba. En outre, de telles butées 20bc qui s'étendent axialement sur toute la longueur axiale du cylindre 20ba permettent de rigidifier le cylindre 20ba, qui présente ainsi une meilleure résistance mécanique aux sollicitations subies, notamment lors de l'assemblage/désassemblage de l'embout 14.

La douille 16 présente des fenêtres 17 permettant de vérifier que les ailettes 20bb sont bien engagées avec les ergots 20ab. Ces fenêtres 17 servent également à faciliter la fabrication par injection notamment pour la formation des ergots 20ab.

Les ailettes 20bb présentent chacune une face axiale inférieure 20bb1 en regard du corps 12 formant un épaulement coopérant avec les ergots 20ab, et une face axiale supérieure 20bb2 opposée en regard de l'embout 14. La face axiale supérieure 20bb2 est inclinée par rapport à la direction axiale et forme une première rampe hélicoïdale (cf. fig. 3).

De la même manière, les butées 20bc présentent chacune une face azimutale avant 20bc1 formant un épaulement coopérant en butée avec les ergots 20ab et une face azimutale arrière 20bc2 opposée. La face azimutale arrière 20bc2 est inclinée par rapport à la direction axiale et forme une deuxième rampe hélicoïdale (cf. fig.3).

L'inclinaison des faces 20bb2 des ailettes 20bb est orientée à l'opposé de l'inclinaison des faces 20bc2 des butées 20bc. De plus chaque face 20bb2 d'une ailette 20bb est azimutalement en vis-à-vis avec une face 20bc2 d'une butée 20bc. Ainsi, chaque paire de faces 20bb2 et 20bc2 forme sensiblement un « V » vue selon une direction radiale (cf. fig.3).

Les faces 20bb2 et 20bc2 forment un système d'alignement azimutal 22 de l'embout 14 par rapport au corps 12 pour aligner azimutalement l'embout 14 et le corps 12 avant de procéder à l'assemblage. Ce système d'alignement permet de mettre en position l'embout 14 par rapport au corps 12 afin de pouvoir procéder au mouvement de translation T1 (cf. fig.1B). Ce système d'alignement permet d'éviter de faire appuyer inutilement les ergots 20ab sur la face axiale supérieure 20bb2 sans se rendre compte que l'embout 14 et le corps 12 ne sont pas en position permettant ce mouvement T1, ce qui rendrait l'assemblage fastidieux et risquerait de conduire à la rupture des ergots et/ou des ailettes si l'utilisateur venait à forcer pour effectuer ce mouvement T1.

On note que le cylindre 20ba présente des découpes formées dans le prolongement des faces 20bb2 et 20bc2. Ces découpes servent principalement à faciliter la fabrication par injection et le démoulage de de la partie mâle 20b.

Le dispositif manuel 10 présente un mécanisme d'encliquetage en rotation 30 comprenant deux saillies axiales 30a diamétralement opposées faisant saillies axialement depuis l'extrémité distale 12a du corps et deux logements 30b diamétralement opposés ménagés sur la face 16c de l'embout 14, et plus particulièrement de la douille 16, en regard de l'extrémité distale 12a du corps 12, chaque logement 30b recevant une saillies axiale 30a. On notera que la face 16c présente des retraits azimutaux 30c permettant la rotation de l'embout 14 sans que ce dernier frotte contre les saillies 30a. Ces retraits 30c présentent sur leurs extrémités azimutales des rampes permettant un passage facilité des saillies 30a afin de les amener dans les logements 30b.

Dans cet exemple, le corps 12 et la douille 16 sont en plastique conducteur. En particulier, le corps 12 et la douille 16 sont dans cet exemple en ABS chargé en noir de carbone. Le coussinet 18 est en matériau conducteur, dans cet exemple en silicone chargé en noir de carbone.

Ainsi, le coussinet 18 étant en contact mécanique avec la douille 16, il a y contact électrique entre le coussinet 18 et la douille 16. Par ailleurs, grâce à la connexion baïonnette 20 la douille 16 est en contact mécanique avec le corps 12. Il y a donc contact électrique entre la douille 16 et le corps 12. Ainsi, le coussinet 18 est en contact électrique avec le corps 12 par l'intermédiaire de la douille 16, grâce à quoi le dispositif manuel est capable d'interagir avec un écran capacitif lorsqu'un utilisateur manipule le dispositif manuel avec sa main.

Dans cet exemple, la face d'extrémité proximale 18e de la douille 18 coopère en appui avec l'extrémité distale du cylindre 20ba de la partie mâle 20b de la connexion baïonnette 20 (cf. fig.3), de sorte que le coussinet 18 est également directement en contact électrique avec le corps 12. Ainsi, dans cette configuration particulière, il est possible d'utiliser un matériau non conducteur pour la fabrication de la douille 16 sans altérer le bon fonctionnement du dispositif manuel 10.

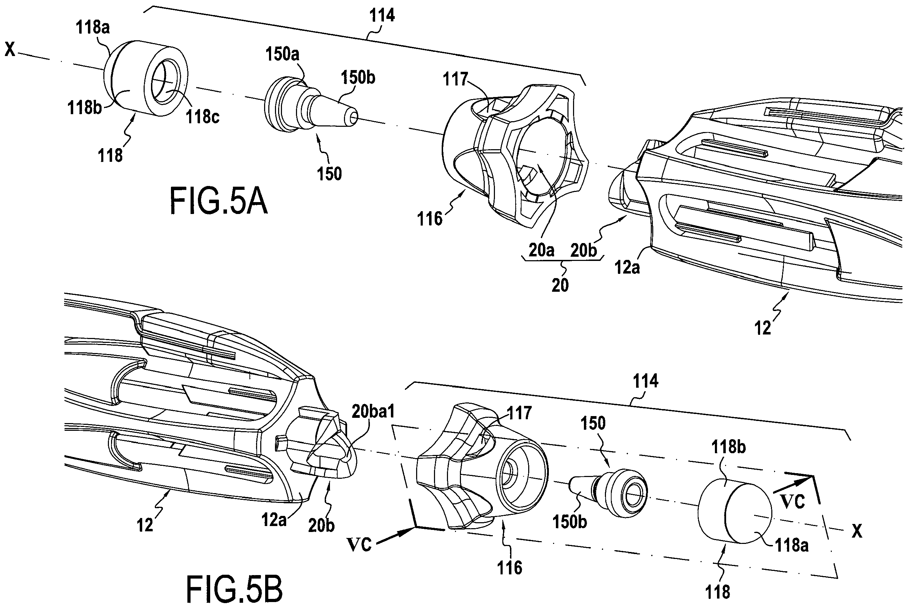

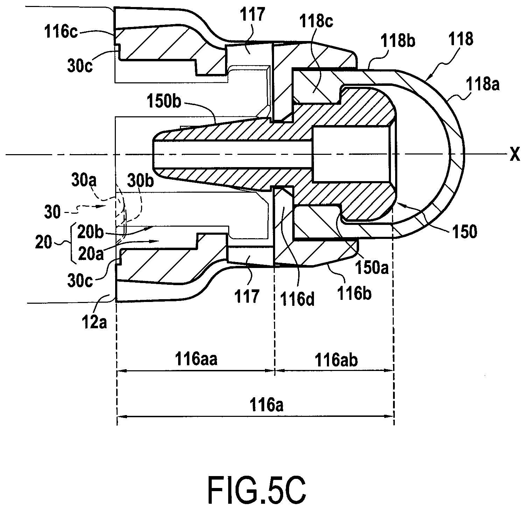

Une première variante 114 de l'embout amovible 14 va être maintenant décrite en référence aux figures 5A, 5B et 5C. Seul le coussinet ainsi que la partie d'attache au coussinet de la douille diffèrent de l'embout 14. En particulier, la connexion baïonnette, le système d'alignement azimutal et le mécanisme d'encliquetage en rotation restent similaires. Les parties similaires présentent des signes de références inchangés tandis que les parties modifiées voient leur signe de référence incrémenté de 100.

L'embout 114 présente un coussinet 118 monté sur une douille 116 par l'intermédiaire d'un contacteur 150. Plus particulièrement, le coussinet 118 présente une extrémité distale 118a de coopération avec un écran capacitif, cette extrémité 118a présentant dans cet exemple une forme sensiblement hémisphérique creuse. L'extrémité 118a est disposée dans le prolongement d'une partie de fixation 118b de forme sensiblement cylindrique creuse. Cette partie de fixation 118b présente une collerette 118c disposée au voisinage de l'extrémité libre de la partie de fixation 118b, à l'intérieur de la partie de fixation 118b. Cette collerette 118c coopère par encliquetage avec un épaulement 150a du contacteur 150.

La douille 116 présente une partie proximale de coopération avec l'extrémité distale 12a du corps 12 similaire à celle de la douille 16 tandis que la partie distale de la douille 116 diffère. En particulier, la douille 116 présente une cavité axiale traversante 116a comprenant une portion axiale sensiblement cylindrique 116aa similaire à la portion axiale 16aa de la douille 16, tandis que la portion axiale 116ab recevant le coussinet 118 est différente. La portion axiale distale 116ab est sensiblement cylindrique et reçoit en partie le coussinet 118. Cette portion 116ab de la cavité 116 est délimitée par une jupe 116b qui verrouille l'encliquetage du coussinet 118 avec le contacteur 150. Une paroi annulaire 116d sépare axialement la portion 116aa et la portion 116ab.

Le connecteur 150 supportant le coussinet 118 est encliqueté avec la douille 116, et plus particulièrement avec la paroi annulaire 116d. Le connecteur 150 présente une fiche tronconique 150b de contact, cette fiche 150b coopérant avec l'extrémité distale du cylindre 20ba de la partie mâle 20b de la connexion baïonnette 20, et plus particulièrement avec le chanfrein intérieur 20ba1 de l'extrémité distale du cylindre 20ba. Le connecteur 150 présente un trou traversant 150c selon la direction axiale X formant un évent pour équilibrer la pression interne du volume formée entre le coussinet 118 et le connecteur 150 et la pression à l'extérieur dudit volume.

Le contacteur 150 est en plastique conducteur. Dans cet exemple, le contacteur est en ABS chargé en noir de carbone. Le corps 12, la douille 116 sont également en plastique conducteur, dans cet exemple en ABS chargé en noir de carbone. Le coussinet 118 est en matériau conducteur, dans cet exemple en silicone chargé en noir de carbone.

Ainsi, tout comme précédemment, le coussinet 118 est en contact électrique avec le corps 12 via la douille 116. Dans cet exemple, le coussinet 118 est également en contact électrique avec le corps 12 par l'intermédiaire du contacteur 150. Ainsi, comme précédemment, il est possible d'utiliser un matériau non conducteur pour la fabrication de la douille 116 sans altérer le bon fonctionnement du dispositif manuel.

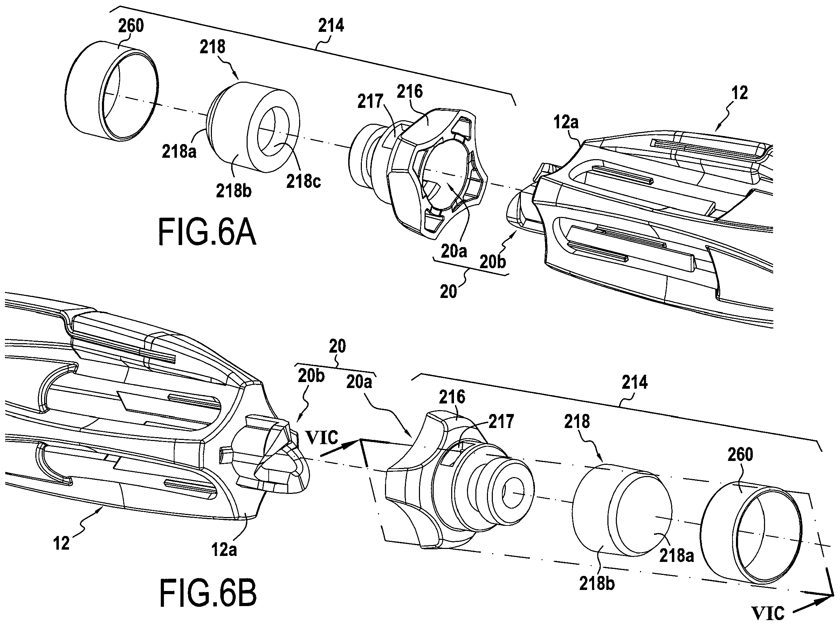

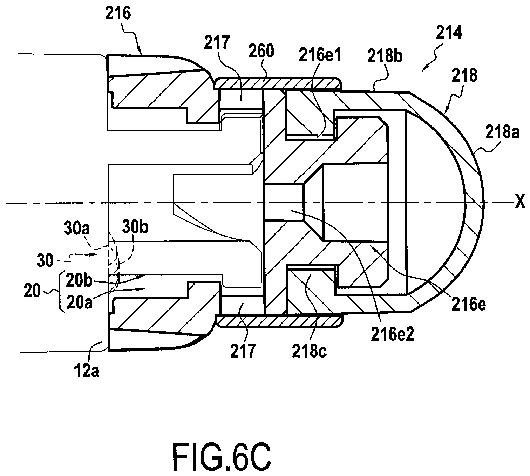

Une deuxième variante 214 de l'embout amovible 14 va être maintenant décrite en référence aux figures 6A, 6B et 6C. Seul le coussinet ainsi que la partie d'attache au coussinet de la douille diffèrent des embouts 14 et 114. En particulier, la connexion baïonnette, le système d'alignement azimutal et le mécanisme d'encliquetage en rotation sont similaires. Par rapport à l'embout 14, les parties similaires présentent des signes de références inchangés tandis que les parties modifiées voient leur signe de référence incrémenté de 200.

Le coussinet 218 est monté sur la douille 216, et plus particulièrement sur un support 216e de la douille 216. Le coussinet 218 présente une structure similaire à celle du coussinet 118 des figures 5A, 5B et 5C, seule les dimensions étant différentes.

Dans cette deuxième variante, la collerette 218c coopère par encliquetage avec une gorge annulaire 216e1 ménagée dans le support 216e. Un anneau 260 est emmanché à force autour de la partie de fixation 218b et du support 216e et serti sur le support 216e (cf. fig.6C). Cet anneau 260 verrouille l'encliquetage du coussinet 218 sur le support 216e et maintien la collerette 218c dans la gorge annulaire 216e1. Le support 216e présente un trou traversant 216e2 selon la direction axiale X formant un évent pour équilibrer la pression interne du volume formée entre le coussinet 218 et le support 216e et la pression à l'extérieur dudit volume.

Le corps 12 et la douille 216 sont en plastique conducteur, dans cet exemple en ABS chargé en noir de carbone. Le coussinet 218 est en matériau conducteur, dans cet exemple en silicone chargé en noir de carbone. L'anneau 260 est en cuivre chromé. Ainsi, le coussinet 218 est en contact électrique avec le corps 12 par l'intermédiaire de la douille 216. L'anneau 260 étant en métal, il participe également au contact électrique entre le support 216e et le coussinet 218, mais sa fonction principale est le blocage mécanique du coussinet 218 sur le support 216e.

Les parties de connexion baïonnette, de système d'alignement azimutal et de mécanisme d'encliquetage en rotation des embouts 14, 114 et 214 étant similaires et compatible avec le corps 12, l'utilisateur n'a besoin que d'un seul corps 12 de dispositif manuel pour utiliser ces embouts, obtenant ainsi un dispositif manuel polyvalent. Dans le présent exemple, le diamètre de l'embout 14 (formant par exemple un premier embout) est plus petit que celui de l'embout 114 (formant par exemple un deuxième embout) qui lui-même présente un diamètre plus petit que celui de l'embout 214 (formant par exemple un troisième embout). On peut donc choisir l'embout le plus adapté à l'écran capacitif que l'on souhaite utiliser.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Dispositif manuel (10) comprenant un corps (12) et un embout amovible (14, 114, 214) comprenant un coussinet (18, 118, 218) pour écran capacitif, ledit embout amovible (14, 114, 214) étant assemblé au corps (12) par une connexion baïonnette (20), le coussinet (18, 118, 218) et au moins une partie du corps (12) étant en contact électrique l'un avec l'autre, et comprenant un système d'alignement azimutal (22) de l'embout amovible (14, 114, 214) par rapport au corps (12) pour aligner azimutalement l'embout amovible (14, 114, 214) et le corps (12) avant de procéder à l'assemblage grâce à la connexion baïonnette (20)..

2. Dispositif (10) selon la revendication 1, dans lequel l'assemblage de l'embout amovible (14, 114, 214) au corps (12) par la connexion baïonnette (20) est verrouillé par un mécanisme d'encliquetage en rotation (30).

3. Dispositif (10) selon l'une quelconque des revendications précédentes, dans lequel le coussinet (118) est en contact électrique avec le corps (12) par l'intermédiaire d'un contacteur (150).

4. Dispositif (10) selon l'une quelconque des revendications précédentes, dans lequel l'embout (14, 114, 214) comprend une douille (16, 116, 216), l'embout (14, 114, 214) étant assemblé au corps (12) par la douille (16, 116, 216).

5. Dispositif (10) selon la revendication 4, dans lequel la douille (16, 116, 216) est en plastique conducteur.

6. Dispositif (10) selon l'une quelconque des revendications 1 à 5, dans lequel au moins une partie du corps (12) coopérant avec l'embout amovible (14, 114, 214) est en plastique conducteur.

7. Dispositif (10) selon la revendication 5 ou 6, dans lequel le plastique conducteur est un plastique chargé en noir de carbone.

8. Dispositif (10) selon l'une quelconque des revendications précédentes, dans lequel le corps (12) s'étend selon une direction axiale (X) et présente une première extrémité distale (12a) sur laquelle l'embout amovible (14, 114, 214) est monté.

9. Dispositif (10) selon la revendication 8, dans lequel le corps (12) présente une deuxième extrémité distale (12b) opposée à la première extrémité distale (12a), la deuxième extrémité distale (12b) présentant une pointe d'écriture ou équivalent, une pointe d'écriture ou équivalent étant une pointe de stylo bille, une pointe de stylo feutre, une pointe de mine de crayon, une pointe rigide pour écran résistif, une pointe de poinçon, ou tout autre embout de dispositif manuel.

10. Ensemble comprenant un dispositif manuel (10) selon l'une quelconque des revendications précédentes et au moins un deuxième embout amovible (114, 214) pour écran capacitif configuré pour être monté sur le corps (12) dudit dispositif manuel (10) à la place de l'embout amovible du dispositif manuel (14).

## Patentansprüche

1. Manuelle Vorrichtung (10), umfassend einen Körper (12) und eine abnehmbare Spitze (14, 114, 214), umfassend ein Pad (18, 118, 218) für einen kapazitiven Bildschirm, wobei die abnehmbare Spitze (14, 114, 214) mit einer Bajonettverbindung (20) mit dem Körper (12) zusammengefügt ist, wobei das Pad (18, 118, 218) und mindestens ein Teil des Körpers (12) in elektrischem Kontakt miteinander stehen, und umfassend ein System zur azimutalen Ausrichtung (22) der abnehmbaren Spitze (14, 114, 214) in Bezug auf den Körper (12), um die abnehmbare Spitze (14, 114, 214) und den Körper (12) azimutal auszurichten, bevor sie mithilfe der Bajonettverbindung (20) zusammengefügt werden.

2. Vorrichtung (10) nach Anspruch 1, wobei das Zusammenfügen der abnehmbaren Spitze (14, 114, 214) mit dem Körper (12) durch die Bajonettverbindung (20) durch einen Drehschnappmechanismus (30) verriegelt wird.

3. Vorrichtung (10) nach einem der vorhergehenden Ansprüche, wobei das das Pad (118) mit dem Körper (12) über einen Kontaktgeber (150) in elektrischem Kontakt steht.

4. Vorrichtung (10) nach einem der vorhergehenden Ansprüche, wobei die Spitze (14, 114, 214) eine Hülse (16, 116, 216) umfasst, wobei die Spitze (14, 114, 214) über die Hülse (16, 116, 216) mit dem Körper (12) zusammengefügt ist.

5. Vorrichtung (10) nach Anspruch 4, wobei die Hülse (16, 116, 216) aus leitfähigem Kunststoff besteht.

6. Vorrichtung (10) nach einem der Ansprüche 1 bis 5, wobei mindestens ein Teil des Körpers (12), der mit der abnehmbaren Spitze (14, 114, 214) zusammenwirkt, aus leitfähigem Kunststoff besteht.

7. Vorrichtung (10) nach Anspruch 5 oder 6, wobei der leitfähige Kunststoff ein carbonverstärkter Kunststoff ist.

8. Vorrichtung (10) nach einem der vorhergehenden Ansprüche, wobei sich der Körper (12) in einer axialen Richtung (X) erstreckt und ein erstes distales Ende (12a) aufweist, an dem die abnehmbare Spitze (14, 114, 214) montiert ist.

9. Vorrichtung (10) nach Anspruch 8, wobei der Körper (12) ein zweites distales Ende (12b) gegenüber dem ersten distalen Ende (12a) aufweist, wobei das zweite distale Ende (12b) eine Schreibspitze oder dergleichen aufweist, wobei eine Schreibspitze oder dergleichen eine Kugelschreiberspitze, eine Filzschreiberspitze, eine Bleistiftminenspitze, eine starre Spitze für einen kapazitiven Bildschirm, eine Stempelspitze oder jede andere Spitze einer manuellen Vorrichtung ist.

10. Anordnung, umfassend eine manuelle Vorrichtung (10) nach einem der vorhergehenden Ansprüche und mindestens eine zweite abnehmbare Spitze (114, 214) für einen kapazitiven Bildschirm, die eingerichtet ist, um auf den Körper (12) der manuellen Vorrichtung (10) anstelle der abnehmbaren Spitze der manuellen Vorrichtung (14) montiert zu werden.

## Claims

1. Manual device (10) comprising a body (12) and a removable endpiece (14, 114, 214) including a pad (18, 118, 218) for a capacitive screen, said removable endpiece (14, 114, 214) being assembled to the body (12) by a bayonet connection (20), the pad (18, 118, 218) and at least a portion of the body (12) being electrically in contact with each other, and comprising an azimuth alignment system (22) for the removable endpiece (14, 114, 214) relative to the body (12) for bringing the removable endpiece (14, 114, 214) into azimuth alignment with the body (12) prior to assembly by means of the bayonet connection (20).

2. Device (10) according to claim 1, wherein the assembly of the removable endpiece (14, 114, 214) to the body (12) by the bayonet connection (20) is locked by a rotary snap-fitting mechanism (30).

3. Device (10) according to any of the preceding claims, wherein the pad (118) is electrically in contact with the body (12) via a contactor (150).

4. Device (10) according to any one of the preceding claims, wherein the endpiece (14, 114, 214) includes a bushing (16, 116, 216), the endpiece (14, 114, 214) being assembled to the body (12) by the bushing (16, 116, 216).

5. Device (10) according to claim 4, wherein the bushing (16, 116, 216) is made of conductive plastics.

6. Device (10) according to any one of the claims 1 to 5, wherein at least a portion of the body (12) co-operating with the removable endpiece (14, 114, 214) is made of conductive plastics.

7. Device (10) according to claim 5 or claim 6, wherein the conductive plastics is a carbonblack-filled plastics.

8. Device (10) according to any one of the preceding claims, wherein the body (12) extends in an axial direction (X) and presents a first distal end (12a) on which the removable endpiece (14, 114, 214) is mounted.

9. Device (10) according to claim 8, wherein the body (12) presents a second distal end (12b) opposite to the first distal end (12a), the second distal end (12b) presenting a writing tip or the equivalent, the writing tip or the equivalent being a ballpoint, a felt tip, a head tip, a rigid pointer for a resistive screen, the tip of a punch, or any other endpiece for a manual device.

10. Assembly comprising a manual device (10) according to any one of the preceding claims and at least one second removable endpiece (114, 214) for a capacitive screen that is configured to be mounted on the body (12) of said manual device (10) instead of the removable endpiece (14) of the manual device.
